# EUROPEAN PATENT APPLICATION

(11) **EP 4 597 245 A2**
(43) Date of publication of application: **06.08.2025**
(21) Application number: 24219787.9
(22) Date of filing: 13.12.2024
(51) Int. Cl.: G05B 19/418, B60L 53/30, F01N 11/00, G05D 1/00

(54) **CONTROL DEVICE, CONTROL SYSTEM, AND CONTROL METHOD**

(30) Priority: 12.01.2024 JP 2024002921
(71) Applicant: TOYOTA JIDOSHA KABUSHIKI KAISHA, Aichi-ken, 471-8571 (JP)
(72) Inventor: YASUYAMA, Shogo, Toyota-shi, 471-8571 (JP); KANOU, Takeshi, Toyota-shi, 471-8571 (JP); KOIDE, Toshihiro, Toyota-shi, 471-8571 (JP); YOKOYAMA, Daiki, Toyota-shi, 471-8571 (JP); SAKAMOTO, Tadaaki, Toyota-shi, 471-8571 (JP)
(74) Representative: J A Kemp LLP

(57) **Abstract**

A control device that controls an operation of a moving object that can move by unmanned driving includes: an acquisition unit that acquires process information indicating a manufacturing process that is being executed with respect to the moving object; a specifying unit that specifies using the process information which one movement mode of an engine movement mode of moving using an engine and a motor movement mode of moving using a motor to use to cause the moving object to move; and a control unit that causes the moving object to move in the specified movement mode.

## Description

### BACKGROUND

### FIELD

The present disclosure relates to a control device, a control system, and a control method.

### RELATED ART

Conventionally, there is known a vehicle that runs autonomously or by remote control in a manufacturing system for producing vehicles (Japanese Unexamined Patent Application Publication (Translation of PCTApplication) No. 2017-538619).

There is a case where hybrid vehicles each including an engine and a motor as driving force sources are produced by self-running production for producing vehicles using running of the vehicles by unmanned driving. However, a method for controlling hybrid vehicles at a time of self-running production has not been proposed yet. Such a task is common not only to hybrid vehicles, but also to hybrid type moving objects each including a motor and an engine as driving force sources.

### SUMMARY

The present disclosure may be implemented as following aspects.
(1)A first aspect according to the present disclosure provides a control device. A control device that controls an operation of a moving object that can move by unmanned driving includes: an acquisition unit that acquires process information indicating a manufacturing process that is being executed with respect to the moving object; a specifying unit that specifies using the process information which one movement mode of an engine movement mode of moving using an engine and a motor movement mode of moving using a motor to use to cause the moving object to move; and a control unit that causes the moving object to move in the specified movement mode. According to this aspect, the control device can specify using the process information which one movement mode of the engine movement mode and the motor movement mode to use to cause the moving object to move. Furthermore, the control device can cause the moving object to move in the specified movement mode. In view of the above, the control device can control an operation of a hybrid type moving object according to the manufacturing process in a process of producing the hybrid type moving objects each including an engine and a motor by self-running production.
(2) According to the above aspect, in the manufacturing process specified using the process information, when it is assumed that there are a predetermined number of people or more within a predetermined distance range from the moving object, the specifying unit may specify that the moving object is caused to move in the motor movement mode. According to this aspect, in the manufacturing process specified using the process information, when it is assumed that there are the predetermined number of people or more within the predetermined distance range from the moving object, the control device can cause the moving object to move in the motor movement mode. By so doing, when a worker or the like who is engaged in manufacturing moving objects works in the surroundings of the moving objects, it is possible to prevent a working environment from deteriorating due to an exhaust gas.
(3) According to the above aspect, in the manufacturing process specified using the process information, when it is assumed that there are less than a predetermined number of people within a predetermined distance range from the moving object, the specifying unit may specify that the moving object is caused to move in the engine movement mode. According to this aspect, in the manufacturing process specified using the process information, when it is assumed that there are less than the predetermined number of people within the predetermined distance range from the moving object, the control device can cause the moving object to move in the engine movement mode. By so doing, it is possible to cause the moving object to move in a state where consumption of electrical power of a battery is suppressed without influencing the state of the battery that supplies the electrical power to the motor.
(4) According to the above aspect, when the manufacturing process specified using the process information is the manufacturing process executed before the manufacturing process of mounting an exhaust gas processing device on the moving object, the specifying unit may specify that the moving object is caused to move in the motor movement mode. According to this aspect, when the manufacturing process specified using the process information is the manufacturing process executed before the manufacturing process of mounting the exhaust gas processing device on the moving object, the control device can cause the moving object to move in the motor movement mode. By so doing, it is possible to prevent a working environment from deteriorating due to an exhaust gas because the exhaust gas cannot be processed using the exhaust gas processing device.
(5) According to the above aspect, when the manufacturing process specified using the process information is the manufacturing process executed after the manufacturing process of mounting an exhaust gas processing device on the moving object, the specifying unit may specify that the moving object is caused to move in the engine movement mode. According to this aspect, when the manufacturing process specified using the process information is the manufacturing process executed after the manufacturing process of mounting the exhaust gas processing device on the moving object, the control device can cause the moving object to move in the engine movement mode. By so doing, it is possible to cause the moving object to move in the state where consumption of electrical power of the battery is suppressed without influencing the state of the battery that supplies the electrical power to the motor.
(6) According to the above aspect, when a target value of a moving speed of the moving object in the manufacturing process specified using the process information is less than a predetermined speed, the specifying unit may specify that the moving object is caused to move in the motor movement mode. According to this aspect, when the target value of the moving speed of the moving object in the manufacturing process specified using the process information is less than the predetermined speed, the control device can cause the moving object to move in the motor movement mode. By so doing, when the manufacturing process that is being executed with respect to the moving object is a manufacturing process that needs to perform finer speed control, the control device can cause the moving object to move in the motor movement mode.
(7) According to the above aspect, when a target value of a moving speed of the moving object in the manufacturing process specified using the process information is a predetermined speed or more, the specifying unit may specify that the moving object is caused to move in the engine movement mode. According to this aspect, when the target value of the moving speed of the moving object in the manufacturing process specified using the process information is the predetermined speed or more, the control device can cause the moving object to move in the engine movement mode. By so doing, when the manufacturing process that is being executed with respect to the moving object is a manufacturing process that does not need to perform fine speed control, the control device can cause the moving object to move in the state where consumption of electrical power of the battery is suppressed without influencing the state of the battery that supplies the electrical power to the motor.
(8) According to the above aspect, when the manufacturing process specified using the process information is the manufacturing process that needs to drive the engine, the specifying unit may specify that the moving object is caused to move in the engine movement mode. According to this aspect, when the manufacturing process specified using the process information is the manufacturing process that needs to drive the engine, the control device can cause the moving object to move in the engine movement mode.
(9) According to the above aspect, the manufacturing process that needs to drive the engine may be at least one of: an engine inspection process of inspecting a function of the engine; a preprocessing process of executing preprocessing for correctly evaluating the function of the engine in the engine inspection process; a processing device inspection process of inspecting a function of an exhaust gas processing device; and a liquid leakage inspection process of inspecting liquid leakage caused when the engine is driven. According to this aspect, when the manufacturing process specified using the process information is at least one of the engine inspection process, the preprocessing process, the processing device inspection process, and the liquid leakage inspection process, the control device can cause the moving object to move in the engine movement mode.
(10) A second aspect according to the present disclosure provides a control system. The control system includes: a moving object that can move by unmanned driving; an acquisition unit that acquires process information indicating a manufacturing process that is being executed with respect to the moving object; a specifying unit that specifies using the process information which one movement mode of an engine movement mode of moving using an engine and a motor movement mode of moving using a motor to use to cause the moving object to move; and a control unit that causes the moving object to move in the specified movement mode. According to this aspect, the control system can specify using the process information which one movement mode of the engine movement mode and the motor movement mode to use to cause the moving object to move. Furthermore, the control system can cause the moving object to move in the specified movement mode. In view of the above, the control system can control an operation of the hybrid type moving object according to the manufacturing process in the process of producing the hybrid type moving objects each including the engine and the motor by self-running production.
(11) A third aspect according to the present disclosure provides a control method. The control method for controlling an operation of a moving object that can move by unmanned driving includes: an acquisition step of acquiring process information indicating a manufacturing process that is being executed with respect to the moving object; a specifying step of specifying using the process information which one movement mode of an engine movement mode of moving using an engine and a motor movement mode of moving using a motor to use to cause the moving object to move; and a control step of causing the moving object to move in the specified movement mode. According to this aspect, it is possible to specify using the process information which one movement mode of the engine movement mode and the motor movement mode to use to cause the moving object to move. Furthermore, it is possible to cause the moving object to move in the specified movement mode. In view of the above, it is possible to control the operation of the hybrid type moving object according to the manufacturing process in the process of producing the hybrid type moving objects each including the engine and the motor by self-running production.

The present disclosure can be implemented as various aspects such as the above control device, control system, and control method. For example, the present disclosure can be implemented as, for example, aspects such as a manufacturing method for the control device and the control system, a control method for the control device and the control system, a computer program for implementing this control method, a non-transitory recording medium having this computer program recorded thereon, and the like.

### BRIEF DESCRIPTION OF THE DRAWINGS

FIG. 1 is a conceptual view illustrating a configuration of a control system according to a first embodiment;
FIG. 2 is a block diagram illustrating the configuration of the control system according to the first embodiment;
FIG. 3 is a view illustrating a detailed configuration of a vehicle according to the first embodiment;
FIG. 4 is a flowchart illustrating a processing procedure of running control of the vehicle according to the first embodiment;
FIG. 5 is a flowchart illustrating a control method of the vehicle at a time of self-running production according to the first embodiment;
FIG. 6 is a block diagram illustrating a configuration of the control system according to a second embodiment;
FIG. 7 is a flowchart illustrating the control method of the vehicle at the time of self-running production according to the second embodiment;
FIG. 8 is a block diagram illustrating the configuration of the control system according to a third embodiment;
FIG. 9 is a flowchart illustrating the control method of the vehicle at the time of self-running production according to the third embodiment;
FIG. 10 is a block diagram illustrating the configuration of the control system according to a fourth embodiment;
FIG. 11 is a flowchart illustrating the control method of the vehicle at the time of self-running production according to the fourth embodiment;
FIG. 12 is an explanatory view illustrating a schematic configuration of the control system according to a fifth embodiment;
FIG. 13 is a flowchart illustrating a processing procedure of running control of the vehicle according to the fifth embodiment; and
FIG. 14 is a flowchart illustrating the control method of the vehicle at the time of self-running production according to the fifth embodiment.

### DETAILED DESCRIPTION

### A. First Embodiment:

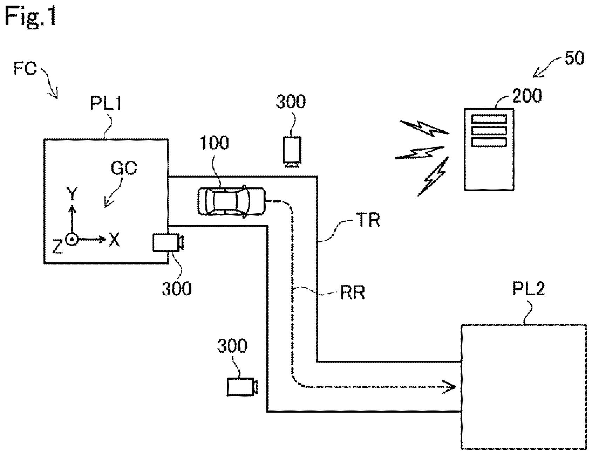

FIG. 1 is a conceptual view illustrating a configuration of a control system 50 according to the first embodiment. The control system 50 is a system that controls an operation of a hybrid type moving object in a process of producing the hybrid type moving objects each including an engine and a motor as driving force sources by self-running production. "Self-running production" is a production system that produces moving objects using "self-running conveyance" of conveying the moving objects using movement of the moving objects by unmanned driving. According to self-running conveyance, at least part of conveyance of moving objects is implemented by self-running conveyance in, for example, a factory FC that manufactures the moving objects. A configuration for implementing self-running conveyance will be also referred to as a "Remote Control auto Driving system".

The control system 50 includes one or more hybrid vehicles 100 that are hybrid type moving objects, a server 200, and one or more external sensors 300. The hybrid vehicle 100 is a car that runs with a driving force of at least one of an engine and a motor. In the present embodiment, the hybrid vehicle 100 is a Plug-in Hybrid Electric Vehicle (PHEV) vehicle that can charge a main battery that supplies electrical power to the motor using electrical power from an external power supply. The hybrid vehicle 100 has an engine movement mode of moving using the engine and a motor movement mode of moving using the motor. The motor movement mode includes a "complete motor movement mode" of performing movement using the motor as a driving force source in a state where the engine is stopped, and a "hybrid movement mode" of performing movement using the engine and the motor as driving force sources. Hereinafter, the hybrid vehicle 100 will be referred to simply as the "vehicle 100".

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a track, a bus, a two-wheel vehicle, a four-wheel vehicle, a construction vehicle, or a combat vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

The control system 50 is used in the factory FC that manufactures the vehicles 100. A reference coordinate system of the factory FC is a global coordinate system GC, and an arbitrary position in the factory FC can be expressed as coordinates of X, Y, and Z in the global coordinate system GC. The factory FC includes a first place PL1 and a second place PL2. The first place PL1 and the second place PL2 are connected by a track TR on which the vehicle 100 is able to run. In the factory FC, a plurality of the external sensors 300 are installed along the track TR. The position of each external sensor 300 in the factory FC is adjusted in advance. The vehicle 100 moves from the first place PL1 to the second place PL2 through the track TR by unmanned driving.

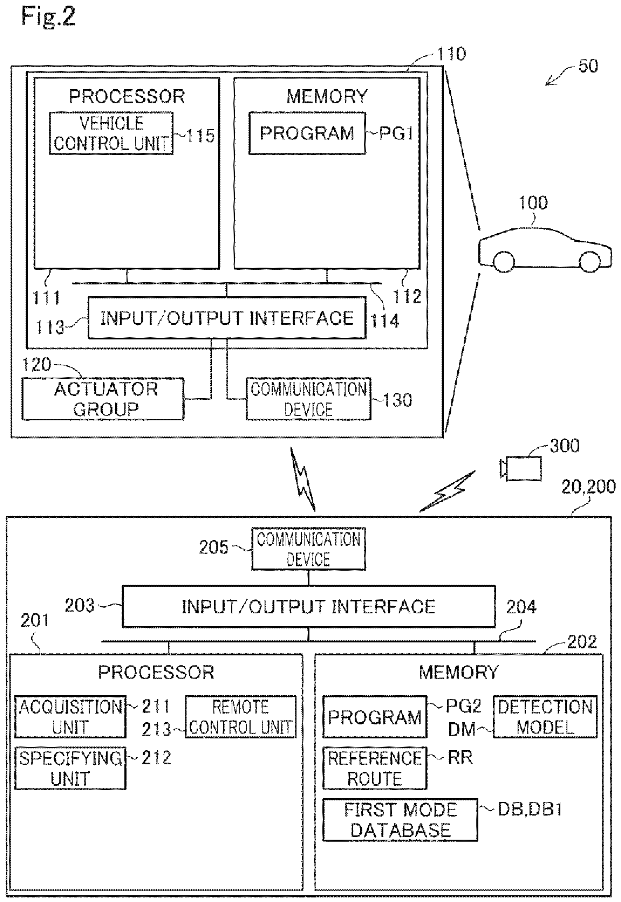

FIG. 2 is block diagram illustrating a configuration of the control system 50 according to the first embodiment. The vehicle 100 includes a vehicle control device 110 that controls each unit of the vehicle 100, an actuator group 120 that includes one or more actuators that are driven under control of the vehicle control device 110, and a communication device 130 that communicates with an external device such as the server 200 by wireless communication. The actuator group 120 includes an actuator of a driving device for accelerating the vehicle 100, an actuator of a steering device for changing a traveling direction of the vehicle 100, and an actuator of a braking device for decelerating the vehicle 100.

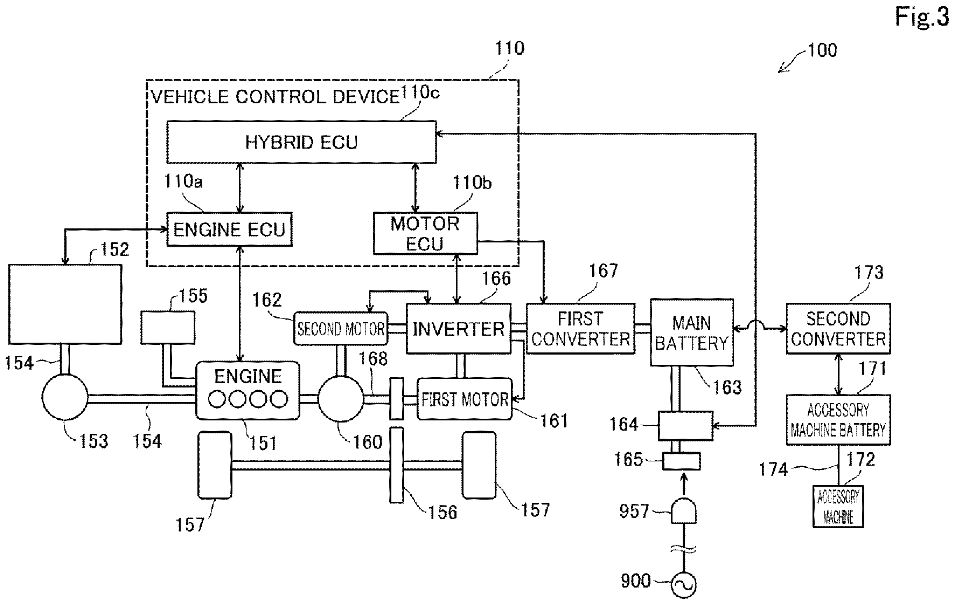

FIG. 3 is a view illustrating a detailed configuration of the vehicle 100 according to the first embodiment. The vehicle 100 includes an engine 151, a fuel tank 152, a fuel pump 153, a fuel supply pipe 154, and an exhaust gas processing device 155.

The engine 151 is an internal combustion engine that uses gasoline and the like as a fuel. The engine 151 is a first driving force source of the vehicle 100. The driving force produced from the engine 151 is transmitted to wheels 157 via a decelerator 156. The fuel tank 152 stores the fuel. The fuel pump 153 pumps up the fuel in the fuel tank 152, and supplies the fuel to the engine 151 through the fuel supply pipe 154.

The exhaust gas processing device 155 is a device that processes an exhaust gas produced when the engine 151 is driven. The exhaust gas processing device 155 is, for example, an Exhaust Gas Recirculation (EGR) device that takes in part of an exhaust gas from an exhaust passage, and circulates the exhaust gas to an intake passage.

The vehicle 100 further includes a power divider mechanism 160, a first motor 161 and a second motor 162 that are motor generators, a main battery 163, a charger 164, a vehicle side connector 165, an inverter 166, and a first converter 167.

The power divider mechanism 160 distributes the driving force produced from the engine 151 to an output shaft 168 and the first motor 161. The power divider mechanism 160 is, for example, a planetary gear mechanism including a sun gear, a pinion gear, a carrier, and a ring gear.

The first motor 161 generates the driving force using at least one of electrical power stored in the main battery 163 and electrical power generated by the second motor 162. The first motor 161 is a second driving force source of the vehicle 100. The driving force produced from the first motor 161 is transmitted to wheels 157 via the decelerator 156. When the vehicle 100 brakes, the first motor 161 is driven by the wheels 157 via the decelerator 156. Thus, the first motor 161 performs regenerative power generation.

The second motor 162 generates electrical power using the driving force of the engine 151 divided by the power divider mechanism 160. The electrical power generated by the second motor 162 using the driving force of the engine 151 is used to charge the main battery 163 or drive the first motor 161.

The main battery 163 drives the first motor 161. Furthermore, the main battery 163 supplies electrical power to an accessory machine battery 171. The main battery 163 is a secondary battery that can be repeatedly charged and discharged. The battery 163 is, for example, a lithium ion battery.

The charger 164 converts an alternating current supplied from an external power supply 900 such as a commercial power supply into a direct current to output to the battery 163. The charger 164 controls an electrical power amount for charging the main battery 163 according to a control signal from the hybrid ECU 110c to be described later.

The vehicle side connector 165 is a connection member that connects the charger 164 to the external power supply 900. The vehicle side connector 165 is configured to be able to be connected to the charger 164 and connected with a power supply side connector 957 connected to the external power supply 900.

The inverter 166 controls the current while converting the direct current of the main battery 163 and the alternating currents of the first motor 161 and the second motor 162.

The first converter 167 converts electrical power between the main battery 163 and the inverter 166. More specifically, the first converter 167 boosts an output voltage of the main battery 163, and supplies the boosted electrical power to the first motor 161. Furthermore, the first converter 167 steps down the voltages of the electrical power generated by the first motor 161 and the second motor 162, and supplies the stepped-down electrical power to the main battery 163. The first converter 167 is connected between the main battery 163 and the inverter 166.

The vehicle 100 further includes the accessory machine battery 171, one or more accessory machines 172, and a second converter 173.

The accessory machine battery 171 supplies electrical power to the one or more accessory machines 172 mounted on the vehicle 100 via an accessory machine electrical power line 174. The accessory machine 172 is an electrical device that operates using output electrical power of the accessory machine battery 171. The accessory machine 172 is, for example, a room lamp or a car navigation device. An output voltage of the accessory machine battery 171 is lower than the output voltage of the main battery 163. The accessory machine battery 171 is charged by receiving supply of the electrical power from the main battery 163 via the second converter 173.

The second converter 173 is a step-down DC/DC converter that steps down the voltage of the output electrical power of the main battery 163, and supplies the stepped-down electrical power to the accessory machine battery 171. The second converter 173 is connected between the main battery 163 and the accessory machine battery 171.

The vehicle 100 further includes an engine ECU 110a, a motor ECU 110b, and the hybrid ECU 110c.

The engine ECU 110a controls an operation of the engine 151. The motor ECU 110b controls operations of the first motor 161, the second motor 162, and the inverter 166, a charging/discharging state of the main battery 163, and the like. The hybrid ECU 110c mutually manages and controls the engine ECU 110a and the motor ECU 110b to control the entire vehicle 100. Note that, although FIG. 3 illustrates each of the ECUs 110a to 110c as separate components, two or more of the ECUs 110a to 110c may be integrated to configure the vehicle control device 110. The present embodiment will be described assuming the vehicle control device 110 configured by integrating each of the ECUs 110a to 110c without distinguishing between the ECUs 110a and 110c.

As illustrated in FIG. 2, the vehicle control device 110 is configured as a computer that includes a processor 111, a memory 112, an input/output interface 113, and an internal bus 114. The processor 111, the memory 112, and the input/output interface 113 are connected to enable bidirectional communication via the internal bus 114. The input/output interface 113 is connected with the actuator group 120 and the communication device 130. The processor 111 implements various functions including the function of the vehicle control unit 115 by executing a program PG1 stored in the memory 112.

The vehicle control unit 115 causes the vehicle 100 to run by controlling the actuator group 120. The vehicle control unit 115 can cause the vehicle 100 to run by controlling the actuator group 120 using a running control signal received from the server 200. The running control signal is a control signal for causing the vehicle 100 to run. In the present embodiment, the running control signal includes an acceleration and a steering angle of the vehicle 100 as parameters. In other embodiments, the running control signal may include the speed of the vehicle 100 as a parameter instead of or in addition to the acceleration of the vehicle 100.

The server 200 has a function of the control device 20 that controls the operation of the vehicle 100 in a process of producing the vehicles 100 by self-running production. The server 200 is configured as a computer that includes a processor 201, a memory 202, an input/output interface 203, and an internal bus 204. The processor 201, the memory 202, and the input/output interface 203 are connected to enable bidirectional communication via the internal bus 204. The input/output interface 203 is connected with the communication device 205 for communicating with various devices outside the server 200. The communication device 205 can communicate with the vehicle 100 by wireless communication, and can communicate with each external sensor 300 by wired communication or wireless communication. The processor 201 implements various functions including functions of an acquisition unit 211, a specifying unit 212, and a remote control unit 213 by executing a program PG2 stored in the memory 202.

The acquisition unit 211 acquires process information indicating a manufacturing process that is being executed with respect to the vehicle 100. The process information is, for example, a process ID that indicates a manufacturing process that is being executed with respect to the vehicle 100. The process ID is an identifier that is allocated to each manufacturing process without overlapping between a plurality of manufacturing processes. The process information is generated by, for example, detecting feature points that enable identification of a plurality of manufacturing processes from captured images captured by the vehicle 100, and specifying a manufacturing process that is being executed with respect to the vehicle 100. The process information may be generated by specifying the manufacturing process that is being executed with respect to the vehicle 100 using manufacturing management information indicating a manufacturing situation of each vehicle 100 in the factory FC.

The specifying unit 212 specifies using the process information which one movement mode of an engine movement mode and a motor movement mode to use to cause the vehicle 100 to move. The specifying unit 212 specifies which one movement mode of the engine movement mode and the motor movement mode to use to cause the vehicle 100 to move by, for example, acquiring the movement mode associated with the manufacturing process specified using the process information in a mode database DB. The mode database DB is a database in which the movement mode that the vehicle 100 needs to adopt among the engine movement mode and the motor mode database is associated with each manufacturing process.

In, for example, a manufacturing process in which there are a predetermined number of workers or more within a predetermined distance range from the vehicle 100, causing the vehicle 100 to move in the engine movement mode is concerned to deteriorate a working environment due to an exhaust gas. Hence, in the manufacturing process specified using the process information, when it is assumed that there are a predetermined number of people or more within the predetermined distance range from the vehicle 100, the specifying unit 212 specifies that the vehicle 100 is caused to move in the motor movement mode.

However, the motor movement mode consumes electrical power of the main battery 163 and consumes the main battery 163. By contrast with this, according to the engine movement mode, by supplying a consumed fuel, it is possible to cause the vehicle 100 to move in a state where consumption of electrical power of the main battery 163 is suppressed without influencing the state of the main battery 163. Hence, in the manufacturing process specified using the process information, when it is assumed that there are less than the predetermined number of people within the predetermined distance range from the vehicle 100, the specifying unit 212 specifies that the vehicle 100 is caused to move in the engine movement mode.

In the present embodiment, in the memory 202 of the server 200, a first mode database DB1 that is the mode database DB is stored in advance. In the first mode database DB1, a manufacturing process in which there are the predetermined number of workers or more within the predetermined distance range from the vehicle 100 is associated with the motor movement mode. In the first mode database DB1, a manufacturing process in which there are less than the predetermined number of workers within the predetermined distance range from the vehicle 100 is associated with the engine movement mode. The specifying unit 212 specifies which one movement mode of the engine movement mode and the motor movement mode to use to cause the vehicle 100 to move by acquiring the movement mode associated with the manufacturing process specified using the process information in the first mode database DB1.

The remote control unit 213 causes the vehicle 100 to move in the specified movement mode. The remote control unit 213 acquires detection results of sensors, generates a running control signal for controlling the actuator group 120 of the vehicle 100 using the detection results, transmits the running control signal to the vehicle 100, and thereby causes the vehicle 100 to run by remote control. The remote control unit 213 may generate and output not only the running control signal, but also a control signal for controlling, for example, the various accessory machines 172 included in the vehicle 100, and an actuator that causes various equipment such as a wiper, a power window, and lamps to operate. That is, the remote control unit 213 may cause these various equipment and various accessory machines 172 to operate by remote control.

The external sensor 300 is a sensor located outside the vehicle 100. The external sensor 300 according to the present embodiment is a sensor that captures the vehicle 100 from the outside of the vehicle 100. The external sensor 300 includes a communication device (not illustrated), and can communicate with another device such as the server 200 by wired communication or wireless communication.

More specifically, the external sensor 300 is configured as a camera. The camera that is the external sensor 300 images the vehicle 100, and outputs a captured image as a detection result.

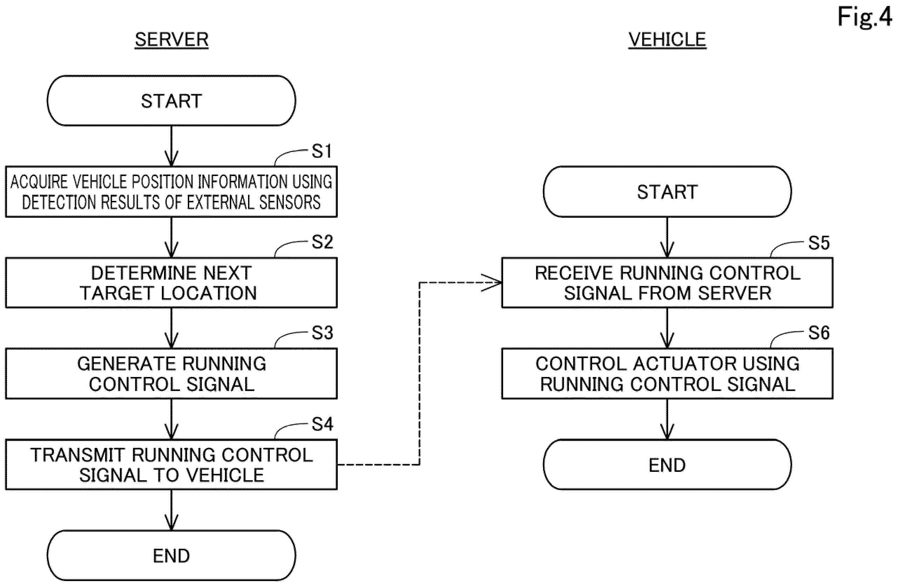

FIG. 4 is a flowchart illustrating a processing procedure of running control of the vehicle 100 according to the first embodiment. In the processing procedure in FIG. 4, the processor 201 of the server 200 functions as the acquisition unit 211, the specifying unit 212, and the remote control unit 213 by executing the program PG2. Furthermore, the processor 111 of the vehicle 100 functions as the vehicle control unit 115 by executing the program PG1.

In step S1, the processor 201 of the server 200 acquires vehicle position information using the detection results output from the external sensors 300. The vehicle position information is position information based on which the running control signal is generated. In the present embodiment, the vehicle position information includes the position and the direction of the vehicle 100 in the global coordinate system GC in the factory FC. More specifically, in step S1, the processor 201 acquires the vehicle position information using the captured images acquired from the cameras that are the external sensors 300.

More specifically, in step S1, the processor 201 detects the outer shape of the vehicle 100 from, for example, the captured images, calculates coordinate systems of the captured images, that is, coordinates of a positioning point of the vehicle 100 in the local coordinate system, converts the calculated coordinates into coordinates in the global coordinate system GC, and thereby acquires the position of the vehicle 100. The outer shape of the vehicle 100 in the captured image may be detected by inputting the captured image to a detection model DM using artificial intelligence, for example. The detection model DM is prepared in the control system 50 or outside the control system 50. The detection model is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The server 200 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server 200 determines a target location toward which the vehicle 100 needs to travel next. In the present embodiment, the target location is expressed by X, Y, and Z coordinates in the global coordinate system GC. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 of the server 200 generates a running control signal for causing the vehicle 100 to run toward the determined target location The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route. If the vehicle 100 is not on the reference route, in other words, if the vehicle 100 deviates from the reference route, the server 200 determines a steering angle and an acceleration in such a manner as to return the vehicle 100 to the reference route RR.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the server 100 receives the running control signal transmitted from the server 200. In step S6, the processor 111 of the vehicle 100 causes the vehicle 100 to run at the acceleration and the steering angle indicated by the running control signal by controlling the actuator group 120 using the received running control signal. The processor 111 repeats the reception of a running control signal and the control over the actuator in a predetermined cycle. According to the control system 50 in the present embodiment, it becomes possible to move the vehicle 100 without using a transport unit such as a crane or a conveyor.

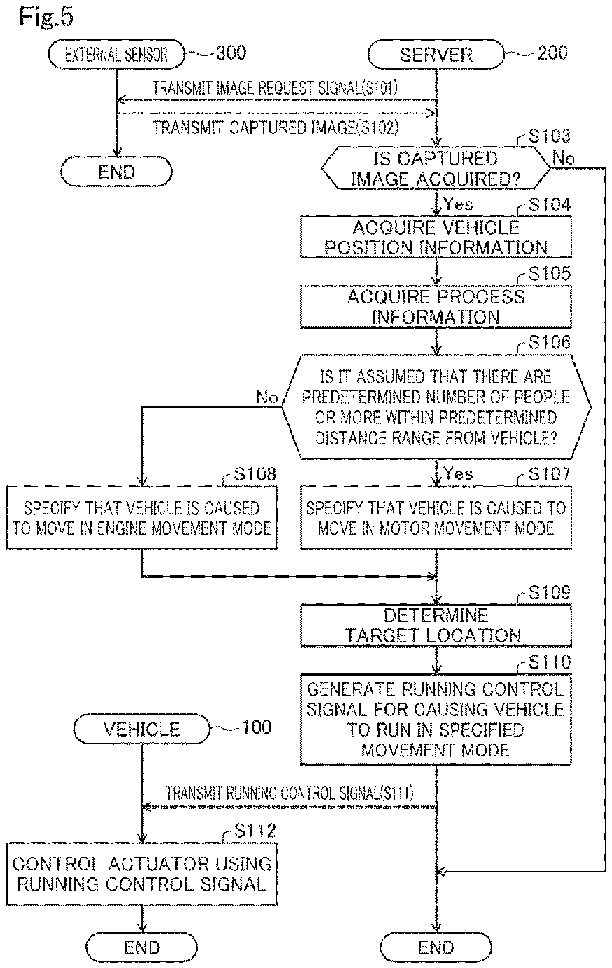

FIG. 5 is a flowchart illustrating a control method of the vehicle 100 at a time of self-running production according to the first embodiment. The flow illustrated in FIG. 5 is repeatedly executed per predetermined time during, for example, a period during which control is executed by unmanned driving.

In step S101, the remote control unit 213 of the server 200 transmits image request signals for acquiring captured images to the external sensors 300 whose detection ranges are scheduled to include the vehicle 100. The external sensors 300 having received the image request signals transmit the captured images to the server 200 in step S102.

When the server 200 acquires the captured images (step S103: Yes), in step S104, the remote control unit 213 of the server 200 acquires the vehicle position information using the detection results output from the external sensors 300. In step S105, the acquisition unit 211 acquires process information. In step S106, the specifying unit 212 specifies using the process information which one movement mode of the engine movement mode and the motor movement mode to use to cause the vehicle 100 to move. In the manufacturing process specified using the process information, when it is assumed that there are the predetermined number of people or more within the predetermined distance range from the vehicle 100 (step S106: Yes), the specifying unit 212 executes step S107. In step S107, the specifying unit 212 specifies that the vehicle 100 is caused to move in the motor movement mode. In the manufacturing process specified using the process information, when it is assumed that there are less than the predetermined number of people within the predetermined distance range from the vehicle 100 (step S106: No), the specifying unit 212 executes step S108. In step S108, the specifying unit 212 specifies that the vehicle 100 is caused to move in the engine movement mode. In step S109, the remote control unit 213 determines a target location toward which the vehicle 100 needs to travel next using the vehicle position information and a reference route RR. In step S110, the remote control unit 213 generates a running control signal for causing the vehicle 100 to run toward the determined target location in the specified movement mode. In step S111, the remote control unit 213 transmits the generated running control signal to the vehicle 100.

In step S112, the vehicle control unit 115 of the vehicle control device 110 causes the vehicle 100 to run at the acceleration and the steering angle indicated by the running control signal by controlling the actuator group 120 using the received running control signal.

According to the above first embodiment, the server 200 can specify using the process information which one movement mode of the engine movement mode and the motor movement mode to use to cause the vehicle 100 to move. Furthermore, the server 200 can cause the vehicle 100 to move in the specified movement mode. Thus, the server 200 can control the operation of the hybrid vehicle 100 according to the manufacturing process in the process of producing the hybrid vehicles 100 by self-running production.

Furthermore, according to the above first embodiment, in the manufacturing process specified using the process information, when it is assumed that there are less than the predetermined number of people within the predetermined distance range from the vehicle 100, the server 200 can execute the following processing. In this case, the server 200 can specify that the vehicle 100 is caused to move in the engine movement mode. By so doing, it is possible to cause the vehicle 100 to move in the state where consumption of the electrical power of the main battery 163 is suppressed without influencing the state of the main battery 163.

Furthermore, according to the above first embodiment, in the manufacturing process specified using the process information, when it is assumed that there are the predetermined number of people or more within the predetermined distance range from the vehicle 100, the server 200 can execute the following processing. In this case, the server 200 can specify that the vehicle 100 is caused to move in the motor movement mode. By so doing, when a worker who is engaged in manufacturing the vehicles 100 works in the surroundings of the vehicles 100, it is possible to prevent a working environment from deteriorating due to an exhaust gas.

Note that, when the manufacturing process specified using the process information is a manufacturing process executed indoor, the specifying unit 212 may specify that the vehicle 100 is caused to move in the motor movement mode. By so doing, when a worker works in the surroundings of the vehicles 100, it is possible to prevent the working environment from deteriorating due to the exhaust gas.

### B. Second Embodiment:

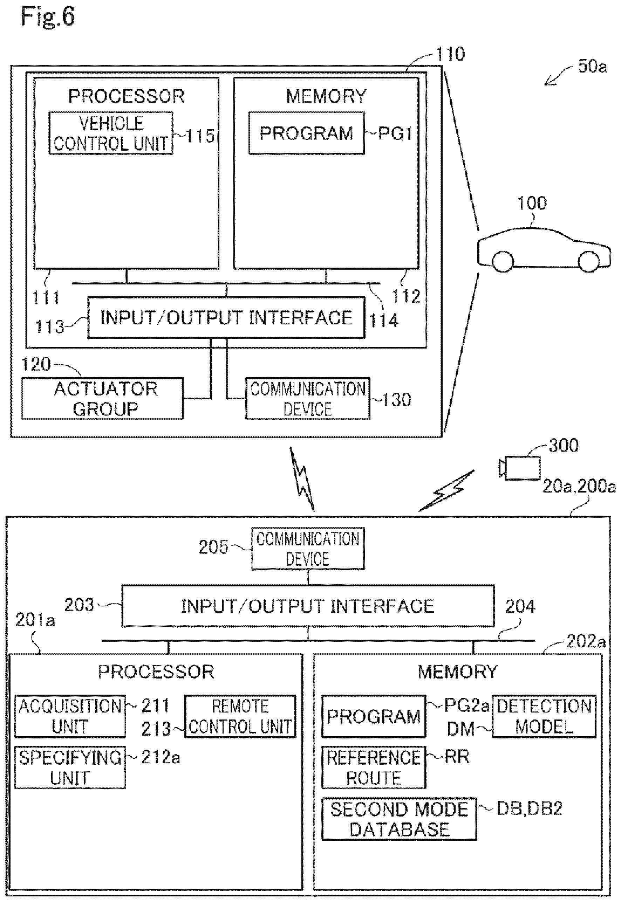

FIG. 6 is block diagram illustrating a configuration of a control system 50a according to the second embodiment. The control system 50a includes the one or more vehicles 100, the one or more external sensors 300, and a server 200a that has a function of a control device 20a. The present embodiment differs from the first embodiment in part of the control method of the vehicle 100 at the time of self-running production. The other components of the control system 50a are the same as those of the first embodiment unless described in particular. The same components as those in the first embodiment will be assigned the same reference numerals, and description thereof will be omitted.

The server 200a is configured as a computer that includes a processor 201a, a memory 202a, the input/output interface 203, and the internal bus 204. The processor 201a implements various functions including functions of the acquisition unit 211, a specifying unit 212a, and the remote control unit 213 by executing a program PG2a stored in the memory 202a.

When a manufacturing process that is being executed with respect to the vehicle 100 is a manufacturing process at the same time as that of or before a manufacturing process of mounting the exhaust gas processing device 155 on the vehicle 100, causing the vehicle 100 to move in the engine movement mode is concerned to deteriorate a working environment due to an exhaust gas. Hence, when the manufacturing process specified using the process information is the manufacturing process executed before the manufacturing process of mounting the exhaust gas processing device 155 on the vehicle 100, the specifying unit 212a specifies that the vehicle 100 is caused to move in the motor movement mode. When the manufacturing process specified using the process information is the manufacturing process of mounting the exhaust gas processing device 155 on the vehicle 100, the specifying unit 212a specifies that the vehicle 100 is caused to move in the motor movement mode. When the manufacturing process specified using the process information is a manufacturing process executed after the manufacturing process of mounting the exhaust gas processing device 155 on the vehicle 100, the specifying unit 212a specifies that the vehicle 100 is caused to move in the engine movement mode.

In the present embodiment, in the memory 202a of the server 200a, a second mode database DB2 that is the mode database DB is stored in advance. In the second mode database DB2, the manufacturing process executed before the manufacturing process of mounting the exhaust gas processing device 155 on the vehicle 100 is associated with the motor movement mode. In the second mode database DB2, the manufacturing process of mounting the exhaust gas processing device 155 on the vehicle 100 is associated with the motor movement mode. In the second mode database DB2, the manufacturing process executed after the manufacturing process of mounting the exhaust gas processing device 155 on the vehicle 100 is associated with the engine movement mode. The specifying unit 212a specifies which one movement mode of the engine movement mode and the motor movement mode to use to cause the vehicle 100 to move by acquiring the movement mode associated with the manufacturing process specified using the process information in the second mode database DB2.

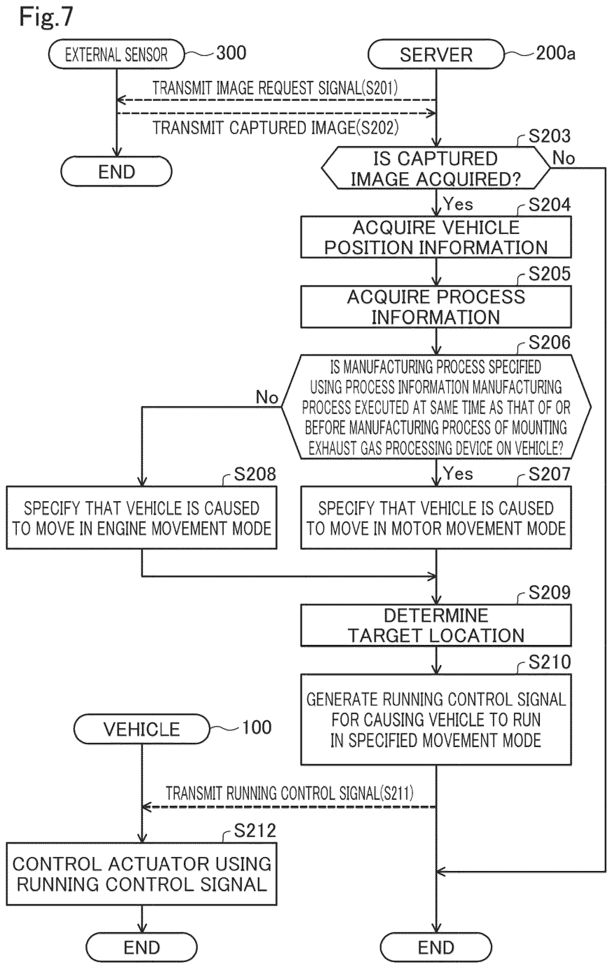

FIG. 7 is a flowchart illustrating the control method of the vehicle 100 at the time of self-running production according to the second embodiment. The flow illustrated in FIG. 7 is repeatedly executed per predetermined time during, for example, a period during which control is executed by unmanned driving.

In step S201, the remote control unit 213 of the server 200a transmits image request signals for acquiring captured images to the external sensors 300 whose detection ranges are scheduled to include the vehicle 100. The external sensors 300 having received the image request signals transmit the captured images to the server 200a in step S202.

When the server 200a acquires the captured images (step S203: Yes), in step S204, the remote control unit 213 of the server 200a acquires the vehicle position information using the detection results output from the external sensors 300. In step S205, the acquisition unit 211 acquires process information. In step S206, the specifying unit 212a specifies using the process information which one movement mode of the engine movement mode and the motor movement mode to use to cause the vehicle 100 to move. When the manufacturing process specified using the process information is the manufacturing process executed at the same time as that of or before the manufacturing process of mounting the exhaust gas processing device 155 on the vehicle 100 (step S206: Yes), the specifying unit 212a executes step S207. In step S207, the specifying unit 212a specifies that the vehicle 100 is caused to move in the motor movement mode. When the manufacturing process specified using the process information is the manufacturing process executed after the manufacturing process of mounting the exhaust gas processing device 155 on the vehicle 100 (step S206: No), the specifying unit 212a executes step S208. In step S208, the specifying unit 212a specifies that the vehicle 100 is caused to move in the engine movement mode. In step S209, the remote control unit 213 determines a target location toward which the vehicle 100 needs to travel next using the vehicle position information and the reference route RR. In step S210, the remote control unit 213 generates a running control signal for causing the vehicle 100 to run toward the determined target location in the specified movement mode. In step S211, the remote control unit 213 transmits the generated running control signal to the vehicle 100.

In step S212, the vehicle control unit 115 of the vehicle control device 110 causes the vehicle 100 to run at the acceleration and the steering angle indicated by the running control signal by controlling the actuator group 120 using the received running control signal.

According to the above second embodiment, when the manufacturing process specified using the process information is the manufacturing process executed after the manufacturing process of mounting the exhaust gas processing device 155 on the vehicle 100, the server 200a executes the following processing. In this case, the server 200a can specify that the vehicle 100 is caused to move in the engine movement mode. By so doing, it is possible to cause the vehicle 100 to move in the state where consumption of the electrical power of the main battery 163 is suppressed without influencing the state of the main battery 163.

Furthermore, according to the above second embodiment, when the manufacturing process specified using the process information is the manufacturing process executed before the manufacturing process of mounting the exhaust gas processing device 155 on the vehicle 100, the server 200a can execute the following processing. In this case, the server 200a can specify that the vehicle 100 is caused to move in the motor movement mode. By so doing, it is possible to prevent a working environment from deteriorating due to an exhaust gas because the exhaust gas cannot be processed using the exhaust gas processing device 155.

Furthermore, according to the above second embodiment, when the manufacturing process specified using the process information is the manufacturing process of mounting the exhaust gas processing device 155 on the vehicle 100, the server 200a can specify that the vehicle 100 is caused to move in the motor movement mode. By so doing, it is possible to prevent the working environment from deteriorating due to the exhaust gas when the exhaust gas cannot be processed because the exhaust gas processing device 155 is being mounted on the vehicle 100.

Note that, in the other embodiments, when the manufacturing process specified using the process information is the manufacturing process of mounting the exhaust gas processing device 155 on the vehicle 100, the specifying unit 212a may specify that the vehicle 100 is caused to move in the engine movement mode. Furthermore, when the manufacturing process specified using the process information is the manufacturing process of mounting the exhaust gas processing device 155 on the vehicle 100, the remote control unit 213 may stop the vehicle 100 without causing the vehicle 100 to move.

### C. Third Embodiment:

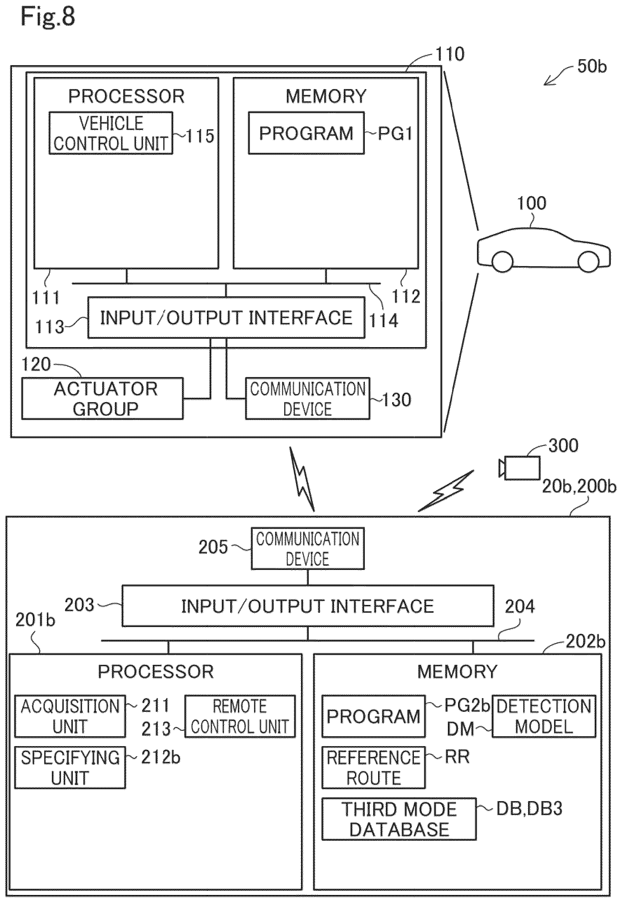

FIG. 8 is block diagram illustrating a configuration of a control system 50b according to the third embodiment. The control system 50b includes the one or more vehicles 100, the one or more external sensors 300, and a server 200b that has a function of a control device 20b. The present embodiment differs from the first embodiment in part of the control method of the vehicle 100 at the time of self-running production. The other components of the control system 50b are the same as those of the first embodiment unless described in particular. The same components as those in the first embodiment will be assigned the same reference numerals, and description thereof will be omitted.

The server 200b is configured as a computer that includes a processor 201b, a memory 202b, the input/output interface 203, and the internal bus 204. The processor 201b implements various functions including functions of the acquisition unit 211, a specifying unit 212b, and the remote control unit 213 by executing a program PG2b stored in the memory 202b.

Generally, torque responses of the motors 161 and 162 are faster than a torque response of the engine 151. Furthermore, generally, generated torques of the motors 161 and 162 can be more accurately acquired than that of the engine 151. Consequently, by causing the vehicle 100 to move in the motor movement mode, it is possible to more finely control a running speed of the vehicle 100 compared to a case where the vehicle 100 is caused to move in the engine movement mode. In, for example, a manufacturing process that needs to perform fine speed control when the vehicle 100 is caused to move, a target value of the running speed of the vehicle 100 is set to a value less than a predetermined speed. Hence, when the target value of the running speed of the vehicle 100 in the manufacturing process specified using the process information is less than the predetermined speed, the specifying unit 212b specifies that the vehicle 100 is caused to move in the motor movement mode. The manufacturing process that needs to perform fine speed control when the vehicle 100 is caused to move is, for example, an assembly process of causing the vehicle 100 to run at a very low speed for at least one working subject of the worker and a robot to assemble parts to the vehicle 100. The manufacturing process that needs to perform fine speed control when the vehicle 100 is caused to move may be a slope conveyance process of causing the vehicle 100 to run while keeping running at a low speed on a slope from the first place PL1 to the second place PL2 in a conveyance process. The conveyance process is a manufacturing process of conveying the vehicle 100 without the working subject's executing work with respect to the vehicle 100.

On the other hand, in a manufacturing process that does not need to perform fine speed control when the vehicle 100 is caused to move, the target value of the running speed of the vehicle 100 is set to a value equal to or more than the predetermined speed. Hence, when the target value of the running speed of the vehicle 100 in the manufacturing process specified using the process information is the predetermined speed or more, the specifying unit 212b specifies that the vehicle 100 is caused to move in the engine movement mode. The manufacturing process that does not need to perform fine speed control when the vehicle 100 is caused to move is, for example, a manufacturing process that does not need to perform fine speed control when the vehicle 100 is caused to move. The manufacturing process that does not need to perform fine speed control when the vehicle 100 is caused to move is a flat road conveyance process of causing the vehicle 100 to run on a flat road from the first place PL1 to the second place PL2 in the conveyance process. The manufacturing process that does not need to perform fine speed control when the vehicle 100 is caused to move may be a yard conveyance process of causing the vehicle 100 to move to a storage place such as a yard after an inspection process is finished in the conveyance process.

In the present embodiment, in the memory 202b of the server 200b, a third mode database DB3 that is the mode database DB is stored in advance. In the third mode database DB3, the manufacturing process in which a value less than the predetermined speed is set as the target value of the running speed of the vehicle 100 is associated with the motor movement mode. In the third mode database DB3, the manufacturing process in which a value equal to or more than the predetermined speed is set as the target value of the running speed of the vehicle 100 is associated with the engine movement mode. The specifying unit 212b specifies which one movement mode of the engine movement mode and the motor movement mode to use to cause the vehicle 100 to move by acquiring the movement mode associated with the manufacturing process specified using the process information in the third mode database DB3.

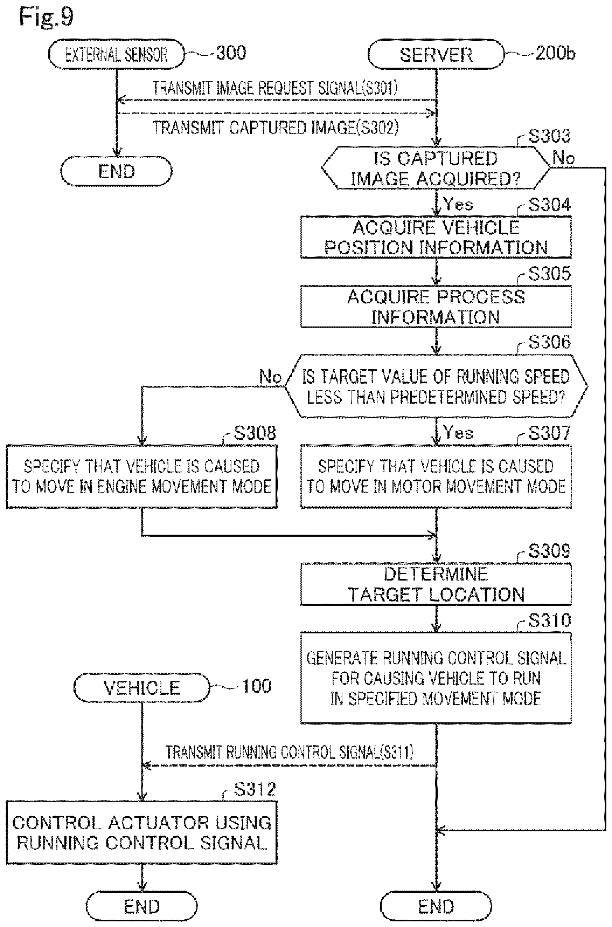

FIG. 9 is a flowchart illustrating the control method of the vehicle 100 at the time of self-running production according to the third embodiment. The flow illustrated in FIG. 9 is repeatedly executed per predetermined time during, for example, a period during which control is executed by unmanned driving.

In step S301, the remote control unit 213 of the server 200b transmits image request signals for acquiring captured images to the external sensors 300 whose detection ranges are scheduled to include the vehicle 100. The external sensors 300 having received the image request signals transmit the captured images to the server 200b in step S302.

When the server 200b acquires the captured images (step S303: Yes), in step S304, the remote control unit 213 of the server 200b acquires the vehicle position information using the detection results output from the external sensors 300. In step S305, the acquisition unit 211 acquires process information. In step S306, the specifying unit 212b specifies using the process information which one movement mode of the engine movement mode and the motor movement mode to use to cause the vehicle 100 to move. When the target value of the running speed of the vehicle 100 in the manufacturing process specified using the process information is less than the predetermined speed (step S306: Yes), the specifying unit 212b executes step S307. In step S307, the specifying unit 212b specifies that the vehicle 100 is caused to move in the motor movement mode. When the target value of the running speed of the vehicle 100 in the manufacturing process specified using the process information is the predetermined speed or more (step S306: No), the specifying unit 212b executes step S308. In step S308, the specifying unit 212b specifies that the vehicle 100 is caused to move in the engine movement mode. In step S309, the remote control unit 213 determines a target location toward which the vehicle 100 needs to travel next using the vehicle position information and the reference route RR. In step S310, the remote control unit 213 generates a running control signal for causing the vehicle 100 to run toward the determined target location in the specified movement mode. In step S311, the remote control unit 213 transmits the generated running control signal to the vehicle 100.

In step S312, the vehicle control unit 115 of the vehicle control device 110 causes the vehicle 100 to run at the acceleration and the steering angle indicated by the running control signal by controlling the actuator group 120 using the received running control signal.

According to the above third embodiment, when the target value of the running speed of the vehicle 100 in the manufacturing process specified using the process information is the predetermined speed or more, the server 200b can cause the vehicle 100 to move in the engine movement mode. By so doing, when the manufacturing process that is being executed with respect to the vehicle 100 is a manufacturing process that does not need to perform fine speed control, the server 200b can cause the vehicle 100 to move in the engine movement mode. Consequently, it is possible to cause the vehicle 100 to move in the state where consumption of the electrical power of the main battery 163 is suppressed without influencing the state of the main battery 163.

Furthermore, according to the above third embodiment, when the target value of the running speed of the vehicle 100 in the manufacturing process specified using the process information is less than the predetermined speed, the server 200b can cause the vehicle 100 to move in the motor movement mode. By so doing, when the manufacturing process that is being executed with respect to the vehicle 100 is a manufacturing process that needs to perform finer speed control, the server 200b can cause the vehicle 100 to move in the motor movement mode.

Note that, in the other embodiments, when the manufacturing process specified using the process information is the manufacturing process that needs to finely control the running position of the vehicle 100, the specifying unit 212b may specify that the vehicle 100 is caused to move in the motor movement mode.

### D. Fourth Embodiment:

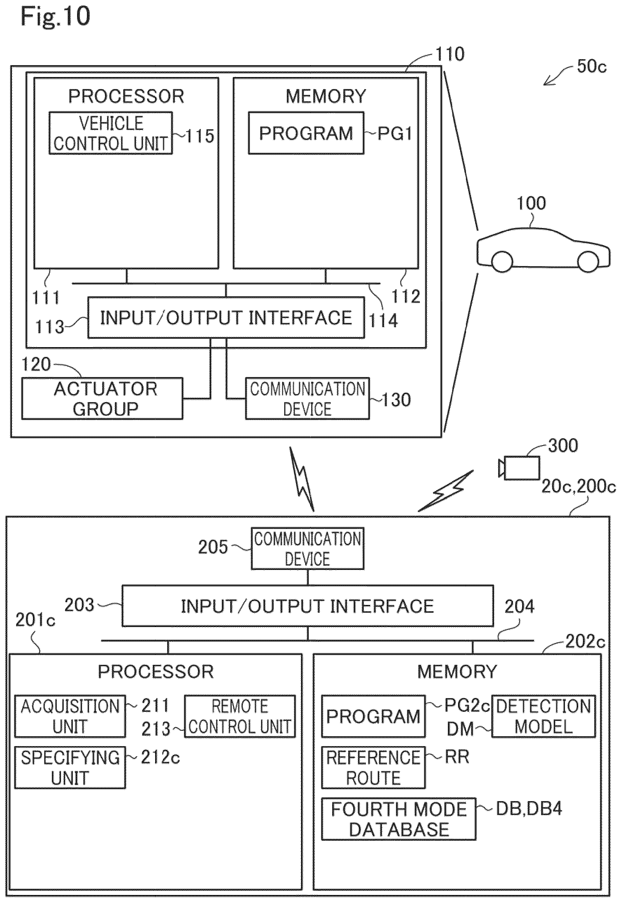

FIG. 10 is block diagram illustrating a configuration of a control system 50c according to the fourth embodiment. The control system 50c includes the one or more vehicles 100, the one or more external sensors 300, and a server 200c that has a function of a control device 20c. The present embodiment differs from the first embodiment in part of the control method of the vehicle 100 at the time of self-running production. The other components of the control system 50c are the same as those of the first embodiment unless described in particular. The same components as those in the first embodiment will be assigned the same reference numerals, and description thereof will be omitted.

The server 200c is configured as a computer that includes a processor 201c, a memory 202c, the input/output interface 203, and the internal bus 204. The processor 201c implements various functions including functions of the acquisition unit 211, a specifying unit 212c, and the remote control unit 213 by executing a program PG2c stored in the memory 202c.

In a process of producing the vehicles 100, the engine 151 may need to be driven depending on work contents of a manufacturing process. Hence, when a manufacturing process specified using process information is a manufacturing process that needs to drive the engine 151, the specifying unit 212c specifies that the vehicle 100 is caused to move in the engine movement mode. The manufacturing process that needs to drive the engine 151 is at least one of, for example, an engine inspection process, a preprocessing process, a processing device inspection process, and a liquid leakage inspection process.

The engine inspection process is a manufacturing process of inspecting the function of the engine 151. The engine inspection process is, for example, a drum test process that is one of inspection processes of inspecting the vehicle 100. The drum test process is a manufacturing process of inspecting the engine 151, meters, a brake, and the like by causing the vehicle 100 to run on a turnable roller. The engine inspection process needs to drive the engine 151 to inspect the function of the engine 151.

The preprocessing process is a manufacturing process of executing preprocessing for correctly evaluating the function of the engine 151 in the engine inspection process; The preprocessing process includes, for example, a warm-up process and a degassing process.

In the engine inspection process, it is necessary to adjust the state of the engine 151 to a predetermined warm-up state before the engine inspection process is started to correctly evaluate the function of the engine 151. The warm-up process is a manufacturing process of adjusting the state of the engine 151 to the predetermined warm-up state. The warm-up process needs to drive the engine 151 to adjust the state of the engine 151 to the predetermined warm-up state.

Furthermore, in the engine inspection process, it is necessary to remove air produced in the fuel supply pipe 154 from the fuel tank 152 to the engine 151 illustrated in FIG. 3 before the engine inspection process is started to correctly evaluate the function of the engine 151. The degassing process is a manufacturing process of removing the air produced in the fuel supply pipe 154 from the fuel tank 152 to the engine 151. In a case of the vehicle 100 including a gasoline engine, for example, the fuel pump 153 is degassed in the degassing process. In a case of the vehicle 100 including a common rail type diesel engine, for example, degassing in a common rail system is performed in the degassing process. The degassing process needs to drive the fuel pump 153. The engine 151 needs to be driven to drive the fuel pump 153.

The processing device inspection process is a manufacturing process of inspecting the function of the exhaust gas processing device 155. An exhaust gas that is a processing target needs to be produced to inspect the function of the exhaust gas processing device 155. Hence, the processing device inspection process needs to drive the engine 151.

The liquid leakage inspection process is a manufacturing process of inspecting liquid leakage caused when the engine 151 is driven. The liquid leakage inspection process is a manufacturing process of inspecting whether or not a liquid such as a fuel, an engine oil, or a coolant leaks from pumps such as the fuel pump 153 and a water pump mounted on the vehicle 100. Hence, the liquid leakage inspection process needs to drive the engine 151.

In the present embodiment, in the memory 202c of the server 200c, a fourth mode database DB4 that is the mode database DB is stored in advance. In the fourth mode database DB4, each of the engine inspection process, the preprocessing process, the processing device inspection process, and the liquid leakage inspection process is associated with the motor movement mode. In the fourth mode database DB4, manufacturing processes other than the engine inspection process, the preprocessing process, the processing device inspection process, and the liquid leakage inspection process are associated with the engine movement mode. The specifying unit 212c specifies which one movement mode of the engine movement mode and the motor movement mode to use to cause the vehicle 100 to move by acquiring the movement mode associated with the manufacturing process specified using the process information in the fourth mode database DB4.

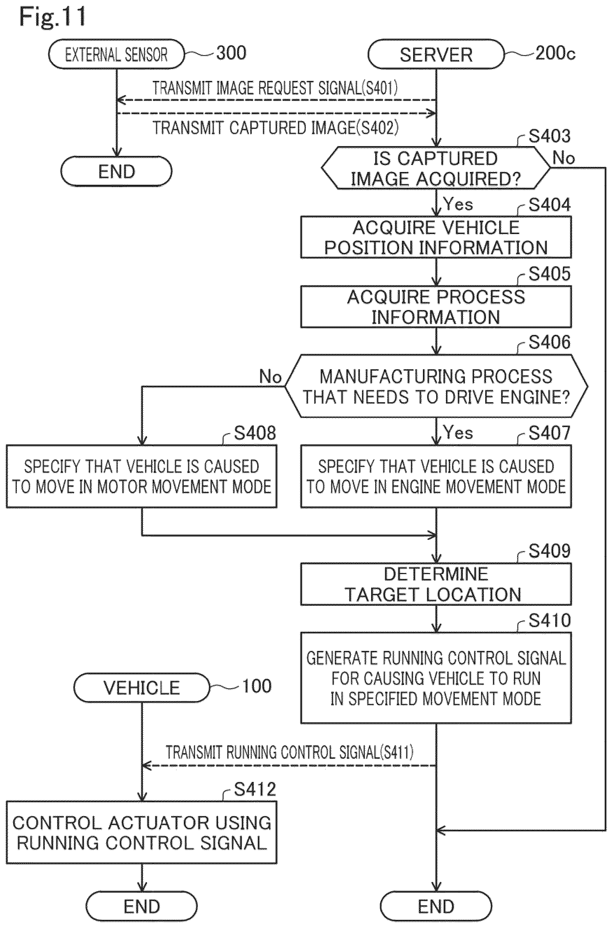

FIG. 11 is a flowchart illustrating the control method of the vehicle 100 at the time of self-running production according to the fourth embodiment. The flow illustrated in FIG. 11 is repeatedly executed per predetermined time during, for example, a period during which control is executed by unmanned driving.

In step S401, the remote control unit 213 of the server 200c transmits image request signals for acquiring captured images to the external sensors 300 whose detection ranges are scheduled to include the vehicle 100. The external sensors 300 having received the image request signals transmit the captured images to the server 200c in step S402.

When the server 200c acquires the captured images (step S403: Yes), in step S404, the remote control unit 213 of the server 200c acquires the vehicle position information using the detection results output from the external sensors 300. In step S405, the acquisition unit 211 acquires process information. In step S406, the specifying unit 212c specifies using the process information which one movement mode of the engine movement mode and the motor movement mode to use to cause the vehicle 100 to move. When the manufacturing process specified using the process information is the manufacturing process that needs to drive the engine 151 (step S406: Yes), the specifying unit 212c executes step S407. In step S407, the specifying unit 212c specifies that the vehicle 100 is caused to move in the engine movement mode. When the manufacturing process specified using the process information is not the manufacturing process that needs to drive the engine 151 (step S406: No), the specifying unit 212c executes step S408. In step S408, the specifying unit 212c specifies that the vehicle 100 is caused to move in the motor movement mode. In step S409, the remote control unit 213 determines a target location toward which the vehicle 100 needs to travel next using the vehicle position information and the reference route RR. In step S410, the remote control unit 213 generates a running control signal for causing the vehicle 100 to run toward the determined target location in the specified movement mode. In step S411, the remote control unit 213 transmits the generated running control signal to the vehicle 100.

In step S412, the vehicle control unit 115 of the vehicle control device 110 causes the vehicle 100 to run at the acceleration and the steering angle indicated by the running control signal by controlling the actuator group 120 using the received running control signal.

According to the above fourth embodiment, when the manufacturing process specified using the process information is the manufacturing process that needs to drive the engine 151, the server 200c can cause the vehicle 100 to move in the engine movement mode.

Furthermore, according to the above fourth embodiment, when the manufacturing process specified using the process information is at least one of the engine inspection process, the preprocessing process, the processing device inspection process, and the liquid leakage inspection process, the server 200c can cause the vehicle 100 to move in the engine movement mode.

### E. Fifth Embodiment:

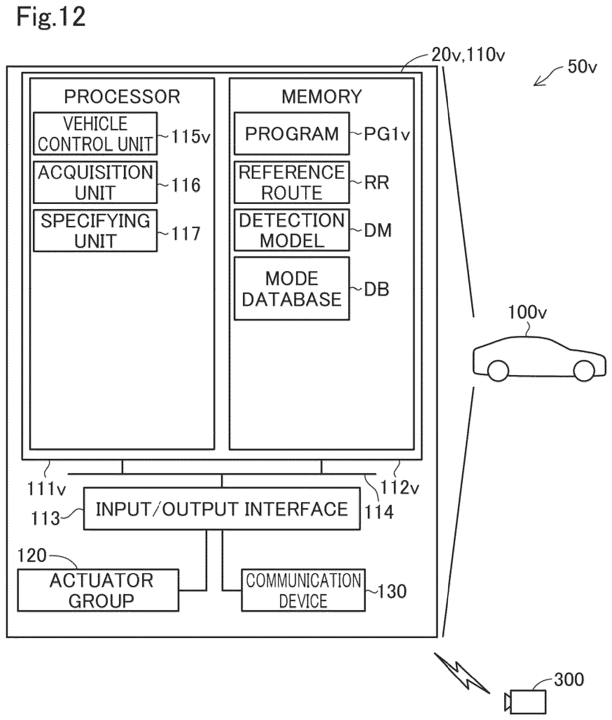

FIG. 12 is an explanatory view illustrating a schematic configuration of a control system 50v according to the fifth embodiment. The control system 50v includes one or more vehicles 100v on which a vehicle control device 110v having the function of a control device 20v is mounted thereon, and the one or more external sensors 300. The present embodiment differs from the first embodiment in that the control system 50v does not include the server 200. Furthermore, the vehicle 100v according to the present embodiment can run by autonomous control of the vehicle 100v. The other components are the same as those in the first embodiment unless otherwise specified.

In the present embodiment, a processor 111v of the vehicle control device 110v functions as an acquisition unit 116, a specifying unit 117, and a vehicle control unit 115v by executing a program PG1v stored in a memory 112v. The acquisition unit 116 acquires process information. The specifying unit 117 specifies using the process information which one movement mode of the engine movement mode and the motor movement mode to use to cause the vehicle 100 to move. The vehicle control unit 115v causes the vehicle 100 to move in the specified movement mode. The vehicle control unit 115v acquires detection results of the sensors, generates a running control signal using the output results, outputs the generated running control signal, causes the actuator group 120 to operate, and thereby can cause the vehicle 100v to run by autonomous control. In the present embodiment, in the memory 112v, the detection model DM, the reference route RR, and the mode database DB are stored in advance in addition to the program PG1v.

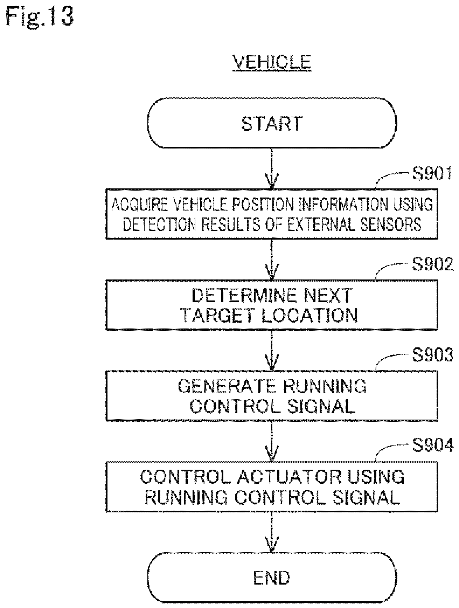

FIG. 13 is a flowchart illustrating a processing procedure of running control of the vehicle 100v according to the second embodiment. In the processing procedure in FIG. 13, the processor 111v of the vehicle 100v functions as the acquisition unit 116, the specifying unit 117, and the vehicle control unit 115v by executing the program PG1v.

In step S901, the processor 111v of the vehicle control device 110v acquires vehicle location information using detection result output from the camera as an external sensor. In step S902, the processor 111v determines a target location to which the vehicle 100v is to move next. In step S903, the processor 111v generates a running control signal for causing the vehicle 100v to run to the determined target location. In step S904, the processor 111v controls the actuator group 120 using the generated running control signal, thereby causing the vehicle 100v to run by following a parameter indicated by the running control signal. The processor 111v repeats the acquisition of vehicle location information, the determination of a target location, the generation of a running control signal, and the control over the actuator in a predetermined cycle. According to the running control in the present embodiment, it is possible to cause the vehicle 100v to run by autonomous control without controlling the vehicle 100v remotely using the server 200.

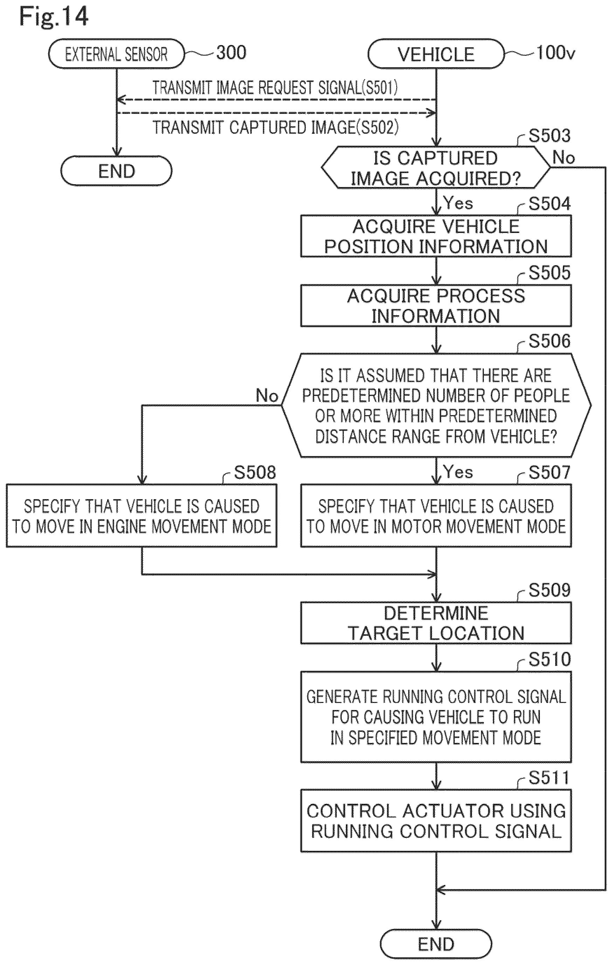

FIG. 14 is a flowchart illustrating the control method of the vehicle 100v at the time of self-running production according to the fifth embodiment. The flow illustrated in FIG. 14 is repeatedly executed per predetermined time during, for example, a period during which control is executed by unmanned driving.

In step S501, the vehicle control unit 115v of the vehicle control device 110v transmits image request signals for acquiring captured images to the external sensors 300 whose detection ranges are scheduled to include the vehicle 100v. The external sensors 300 having received the image request signals transmit the captured images to the vehicle 100v in step S502.

When the vehicle 100v acquires the captured images (step S503: Yes), in step S504, the vehicle control unit 115v of the vehicle control device 110v acquires the vehicle position information using the detection results output from the external sensors 300. In step S505, the acquisition unit 116 acquires process information. In step S506, the specifying unit 117 specifies using the process information which one movement mode of the engine movement mode and the motor movement mode to use to cause the vehicle 100v to move. In the manufacturing process specified using the process information, when it is assumed that there are the predetermined number of people or more within the predetermined distance range from the vehicle 100v (step S506: Yes), the specifying unit 117 executes step S507. In step S507, the specifying unit 117 specifies that the vehicle 100v is caused to move in the motor movement mode. In the manufacturing process specified using the process information, when it is assumed that there are less than the predetermined number of people within the predetermined distance range from the vehicle 100v (step S506: No), the specifying unit 117 executes step S508. In step S508, the specifying unit 117 specifies that the vehicle 100v is caused to move in the engine movement mode. In step S509, the vehicle control unit 115v determines a target location toward which the vehicle 100v needs to travel next using the vehicle position information and the reference route RR. In step S510, the vehicle control unit 115v generates a running control signal for causing the vehicle 100v to run toward the determined target location in the specified movement mode. In step S511, the vehicle control unit 115v causes the vehicle 100v to run according parameters indicated by the running control signal by controlling the actuator group 120 using the generated running control signal.

According to the above fifth embodiment, the vehicle control device 110v can specify using the process information which one movement mode of the engine movement mode and the motor movement mode to use to cause the vehicle 100v to move. Furthermore, the vehicle control device 110v can cause the vehicle 100v to move in the specified movement mode. Thus, the vehicle control device 110v can control the operation of the hybrid vehicle 100v according to the manufacturing process in the process of producing the hybrid vehicles 100v by self-running production.

### F. Other Embodiments:

### F-1. Other Embodiment 1:

In the above embodiments, the vehicles 100 and 100v are plug-in hybrid vehicles. However, the present disclosure is not limited thereto. The vehicles 100 and 100v may be, for example, the hybrid vehicles 100 and 100v that do not include the mechanisms 164 and 165 for charging the main battery 163 using the electrical power from the external power supply 900, and may be fuel cell vehicles that each include a fuel cell as the main battery 163.

### F-2. Other Embodiment 2:

In each of the above embodiments, the external sensor 300 is not limited to the camera, and may be, for example, a ranging device. The ranging device may be, for example, a Light Detection And Ranging (LiDAR). In this case, a detection result output from the external sensor 300 may be three-dimensional point cloud data that indicates the vehicle 100. In this case, the servers 200 and 200a to 200c and the vehicles 100 and 100v may acquire vehicle position information by template matching that uses the three-dimensional point cloud data that is the detection result, and reference point cloud data prepared in advance.

### F-3. Other Embodiment 3:

In each of the above-described first to fourth embodiments, the server 200, 200a-200c performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.
(1) The server 200, 200a-200c may acquire vehicle location information, determine a target location to which the vehicle 100 is to move next, and generate a route from a current location of the vehicle 100 indicated by the acquired vehicle location information to the target location. The server 200, 200a-200c may generate a route to the target location between the current location and a destination or generate a route to the destination. The server 200, 200a-200c may transmit the generated route to the vehicle 100. The vehicle 100 may generate a running control signal in such a manner as to cause the vehicle 100 to run along the route received from the server 200, 200a-200c and control the actuator group 120 using the generated running control signal.
(2) The server 200, 200a-200c may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control actuator group 120 using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server 200, 200-200c may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

### F-4. Other Embodiment 4:

In the above fifth embodiment, an internal sensor is mounted on the vehicle 100v, and a detection result output from the internal sensor may be used for at least one of generation of a route and generation of the running control signal. For example, the vehicle 100v may acquire the detection result of the internal sensor, and reflect the detection result of the internal sensor in a route at a time of generation of the route. The vehicle 100v may acquire the detection result of the internal sensor, and reflect the detection result of the internal sensor in the running control signal at a time of generation of the running control signal.

### F-5. Other Embodiment 5:

In the above fifth embodiment, the vehicle 100c acquires the vehicle position information using the detection results of the external sensors 300. By contrast, the vehicle 100v may be equipped with an internal sensor, the vehicle 100v may acquire vehicle location information using detection result from the internal sensor, determine a target location to which the vehicle 100v is to move next, generate a route from a current location of the vehicle 100v indicated by the acquired vehicle location information to the target location, generate a running control signal for running along the generated route, and control the actuator group 120 using the generated running control signal. In this case, the vehicle 100v is capable of running without using any detection result from the external sensor 300. The vehicle 100v may acquire target arrival time or traffic congestion information from outside the vehicle 100v and reflect the target arrival time or traffic congestion information in at least one of the route and the running control signal. The functional configuration of the control system 50v may be entirely provided at the vehicle 100v. Specifically, the processes realized by the control system 50v in the present disclosure may be realized by the vehicle 100v alone.

### F-6. Other Embodiment 6:

In the above-described first embodiment to fourth embodiment, the server 200, 200a-200c automatically generates a running control signal to be transmitted to the vehicle 100. By contrast, the server 200, 200a-200c may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200, 200a-200c through wire communication or wireless communication, for example, and the server 200, 200a-200c may generate a running control signal responsive to the operation on the operating device.

### F-7. Other Embodiment 7:

In each of the above-described embodiments, the vehicle 100, 100v is simply required to have a configuration to become movable by unmanned driving. The vehicle 100 may embodied as a platform having the following configuration, for example. The vehicle 100, 100v is simply required to include at least the vehicle controller 110,110v and actuator group 120. In order for the vehicle 100, 100v to acquire information from outside for unmanned driving, the vehicle 100, 100v is simply required to include the communication device 130 further. Specifically, the vehicle 100, 100v to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100, 100v before the vehicle 100 is shipped from the factory FC, or a remaining component such as a bodyshell may be mounted on the vehicle 100, 100v after the vehicle 100, 100v is shipped from a factory while the remaining component such as a bodyshell is not mounted on the vehicle 100, 100v. Each of components may be mounted on the vehicle 100, 100v from any direction such as from above, from below, from the front, from the back, from the right, or from the left. Alternatively, these components may be mounted from the same direction or from respective different directions. The location determination for the platform may be performed in the same way as for the vehicle 100, 100v In each of the above-described embodiments.

### F-8. Other Embodiment 8:

The vehicle 100, 100v may be manufactured by combining a plurality of modules. The module means a unit composed of one or more components grouped according to a configuration or function of the vehicle 100, 100v. For example, a platform of the vehicle 100, 100v may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100, 100v different from the platform may be modularized. Various modules may include an arbitrary exterior component such as a bumper or a grill, or an arbitrary interior component such as a seat or a console. Not only the vehicle 100, 100v but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

### F-9. Other Embodiment 9:

In each of the above embodiments, part or all of the functions and the processing implemented as software may be implemented as hardware. Furthermore, part or all of the functions and the processing implemented as hardware may be implemented as software. As the hardware for implementing the various functions in each of the above embodiments, for example, various circuits such as an integrated circuit and a discrete circuit may be used.

The present disclosure is not limited to the above-described embodiments, and can be implemented by various configurations without departing from the gist of the present disclosure. For example, technical features in the embodiments corresponding to technical features in the aspects described in the summary can be replaced or combined as appropriate to solve part or all of the above-described problems or achieve part or all of the above-described effects. Furthermore, the technical features that are not described as indispensable in this description can be deleted as appropriate.

## Claims

1. A control device(20;20a;20b;20c;20v) that controls an operation of a moving object(100;100v) that can move by unmanned driving comprising:
an acquisition unit(116;211) that acquires process information indicating a manufacturing process that is being executed with respect to the moving object(100;100v);
a specifying unit(117;212) that specifies using the process information which one movement mode of an engine movement mode of moving using an engine(151) and a motor movement mode of moving using a motor(161,162) to use to cause the moving object(100;100v) to move; and
a control unit(213;115v) that causes the moving object(100;100v) to move in the specified movement mode.

2. The control device(20;20v) according to claim 1, wherein, in the manufacturing process specified using the process information, when it is assumed that there are a predetermined number of people or more within a predetermined distance range from the moving object(100;100v), the specifying unit(117;212) specifies that the moving object(100;100v) is caused to move in the motor movement mode.

3. The control device(20;20v) according to claim 1 or 2, wherein, in the manufacturing process specified using the process information, when it is assumed that there are less than a predetermined number of people within a predetermined distance range from the moving object(100;100v), the specifying unit(117;212) specifies that the moving object(100;100v) is caused to move in the engine movement mode.

4. The control device(20a) according to claim 1, wherein, when the manufacturing process specified using the process information is the manufacturing process executed before the manufacturing process of mounting an exhaust gas processing device(155) on the moving object(100), the specifying unit(212a) specifies that the moving object(100) is caused to move in the motor movement mode.

5. The control device(20a) according to claim 1 or 4, wherein, when the manufacturing process specified using the process information is the manufacturing process executed after the manufacturing process of mounting an exhaust gas processing device(155) on the moving object(100), the specifying unit(212a) specifies that the moving object(100) is caused to move in the engine movement mode.

6. The control device(20b) according to claim 1, wherein, when a target value of a moving speed of the moving object(100) in the manufacturing process specified using the process information is less than a predetermined speed, the specifying unit(212b) specifies that the moving object(100) is caused to move in the motor movement mode.

7. The control device(20b) according to claim 1 or 6, wherein, when a target value of a moving speed of the moving object(100) in the manufacturing process specified using the process information is a predetermined speed or more, the specifying unit(212b) specifies that the moving object(100) is caused to move in the engine movement mode.

8. The control device(20c) according to claim 1, wherein, when the manufacturing process specified using the process information is the manufacturing process that needs to drive the engine(151), the specifying unit(212c) specifies that the moving object(100) is caused to move in the engine movement mode.

9. The control device according to claim 1, wherein the manufacturing process that needs to drive the engine(151) is at least one of:
an engine inspection process of inspecting a function of the engine(151);
a preprocessing process of executing preprocessing for correctly evaluating the function of the engine(151) in the engine inspection process;
a processing device inspection process of inspecting a function of an exhaust gas processing device(155); and
a liquid leakage inspection process of inspecting liquid leakage caused when the engine(151) is driven.

10. A control system(50;50a;50b;50c;50v) comprising:
a moving object(100;100v) that can move by unmanned driving;
an acquisition unit(116;211) that acquires process information indicating a manufacturing process that is being executed with respect to the moving object(100;100v);
a specifying unit(117;212;212a;212b;212c) that specifies using the process information which one movement mode of an engine movement mode of moving using an engine(151) and a motor movement mode of moving using a motor(161,162) to use to cause the moving object(100;100v) to move; and
a control unit(115v;213) that causes the moving object(100;100v) to move in the specified movement mode.

11. A control method for controlling an operation of a moving object(100;100v) that can move by unmanned driving comprising:
an acquisition step of acquiring process information indicating a manufacturing process that is being executed with respect to the moving object(100;100v);
a specifying step of specifying using the process information which one movement mode of an engine movement mode of moving using an engine(151) and a motor movement mode of moving using a motor(161,162) to use to cause the moving object(100;100v) to move; and
a control step of causing the moving object(100;100v) to move in the specified movement mode.
